Europäisches Patentamt

European Patent Office

Office européen des brevets

(19)

(11) Veröffentlichungsnummer: **0 267 370 B1**

(12)

# EUROPÄISCHE PATENTSCHRIFT

(45) Veröffentlichungstag der Patentschrift:
04.04.90

(51) Int. Cl.⁴: **E02D 31/00, B09B 1/00**

(21) Anmeldenummer: **87110428.7**

(22) Anmeldetag: **18.07.87**

(54) **Abdichtung für Deponien.**

(30) Priorität: **08.11.86 DE 3638233**

(43) Veröffentlichungstag der Anmeldung:
**18.05.88 Patentblatt 88/20**

(45) Bekanntmachung des Hinweises auf die Patenterteilung:
**04.04.90 Patentblatt 90/14**

(84) Benannte Vertragsstaaten:
**AT BE CH ES FR GB GR IT LI NL SE**

(56) Entgegenhaltungen:
**EP-A- 0 082 629
DE-A- 3 444 895**

**TECHNISCHE RUNDSCHAU, Band 75, Nr. 4,
Januar 1983, Seiten 11,12, Bern, CH; F. SCHEIDEGGER:
"Kunststoffbahnen dichten gesicherte Abfalldeponien"**

(73) Patentinhaber: **Niederberg-Chemie GmbH,
Postfach 11 63, D-4133 Neukirchen-Vluyn(DE)**

(72) Erfinder: **Schlütter, Aloys, Rheinstrasse 42,
D-4152 Kempen 3(DE)**
Erfinder: **Hartmann, Rolf, Haselnussweg 1, D-6277 Bad
Camberg(DE)**

## Beschreibung

Die Erfindung betrifft eine Abdichtung für Deponien oder dergleichen, bei der eine Kunststoffabdichtungsbahn (2) in Kombination mit einer mineralischen Dichtschicht (1), beispielsweise Lehm, oberhalb von dieser Dichtschicht Anwendung findet und bei der zwischen der mineralischen Schicht und der Kunststoffabdichtungsbahn eine Abdeckung vorgesehen ist.

In der Zeitschrift "Schweizer Ingenieur und Architekt", 46/83, Seite 1101 bis 1103 ist eine derartige Abdichtung beschrieben. Diese hat folgenden Schichtenaufbau:

Lehmdichtung, dann 2,5 mm dicke Bitumenbahn mit einem Polyethylengeotextil als Träger, darüber eine weitere Lehmschicht, auf der Lehmschicht ein Drainagesystem für verschmutztes, die Deponie durchsickerndes Oberflächenwasser sowie seitlich am Deponierand ausgeflockter Kies-Sand-Waschschlamm als seitliche Dichtung. In dieses so ausgekleidete Becken können Hausmüll, Sperrgut, Industrieabfälle, Klärschlamm und Schlacken aus Kehrichtverbrennungsanlagen verfüllt werden.

Für die Lehmschicht sind Schichtdicken von 60 bis 100 cm gebräuchlich. Die Methode hat den überragenden Vorteil, daß bei Beschädigung der Kunststoffbahn durch unmittelbare Haftung zwischen Kunststoffbahn und mineralischer Schicht das Sickerwasser nicht verlaufen kann und somit die Undichtigkeit erheblich begrenzt wird, d. h. das Sickerwasser kann nicht entsprechend dem Gefälle der Kunststoffbahn an dieser verlaufen.

Dieses System hat allerdings verlegetechnisch eine ganz erhebliche Schwierigkeit. Die Schwierigkeit wird durch den Vorlauf der mineralischen Dichtung hervorgerufen. Zunächst wird nämlich die mineralische Dichtschicht, beispielsweise Lehm, als erste Schicht aufgebaut. Dieser Schichtenaufbau und das anschließende Verlegen nehmen einige Zeit in Anspruch. In dieser Zeit kann es zu einer Austrocknung der mineralischen Schicht oder zu einer übergroßen Nässe vor der Verlegung der Kunststoffabdichtungsbahnen kommen. Um dem entgegenzuwirken wird die mineralische Schicht üblicherweise mit einer dünnen Polyethylenfolie abgedeckt. Die Polyethylenfolie hat den Nachteil, daß sie sehr leicht vom Wind verweht wird und wieder aufgenommen werden muß. Schließlich ist aus der Zeitschrift "Schweizer Ingenieur und Architekt", 46/83, Seiten 1101 bis 1103, noch die Verwendung eines Geotextils bei Kunststoffabdichtungsbahnen bekannt. Das Geotextil dient als Schutz gegen Durchstoßen der Kunststoffabdichtungsbahn.

Der Erfindung liegt die Aufgabe zugrunde, die Nachteile bekannter Abdichtungen zu beseitigen. Nach der Erfindung wird das dadurch erreicht, daß die Abdeckung aus einem Textil mit einer verrottbaren Dichtschicht besteht. Als Textil kann ein hochreißfestes, dünnes Kunststoffvlies verwendet werden. Das Textil ist dann unterseitig mit der verrottbaren Dichtschicht versehen.

Diese Schicht ist hochdampfdiffusionsdurchlässig, so daß eine gewisse Feuchtigkeitsmenge von oben durchtreten kann und somit auch die Feuchtigkeit der darunterliegenden mineralischen Schicht gewährleistet ist. Die Dichtschicht bewirkt jedoch andererseits, daß bei stärkeren Regenfällen das Oberflächenwasser ablaufen kann. Gleichzeitig saugt sich das Textil dergestalt an der Unterlage, also der ersten aufgebauten Mineralschicht fest, daß es nicht zusätzlich beschwert werden braucht. Schließlich verrottet die Dichtschicht nach einiger Zeit, so daß das dünne Textil voll von der mineralischen Schicht durchdrungen wird. Die mineralische Schicht schließt dann wieder an die darüber verlegte Kunststoffabdichtungsbahn an. Vorteilhafterweise braucht das Textil nicht wieder aufgenommen werden.

Vorzugsweise wird als Dichtschicht für das als Abdeckung dienende Textil ein Latexauftrag verwendet.

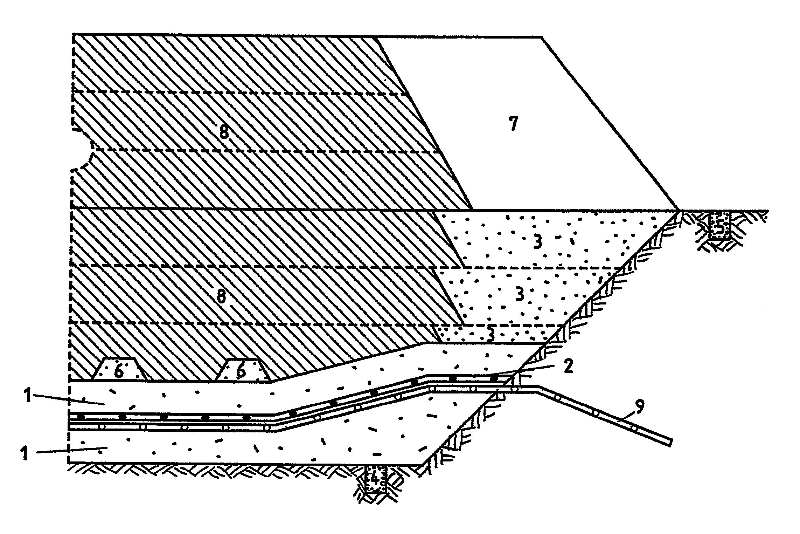

In der Zeichnung ist ein Ausführungsbeispiel der Erfindung dargestellt.

Die Darstellung zeigt einen Querschnitt durch einen erfindungsgemäßen Deponieaufbau. Zwischen zwei Lehmlagen 1 von je 50 cm Stärke ist eine 2,5 mm dicke Kunststoffbahn 2 aus einem Polyethylencopolymer-Bitumengemisch angeordnet. Am seitlichen Rand befinden sich Schichten 3 aus geflocktem Kies-Sand-Waschschlamm als seitliche Dichtung. Mit 4 ist ein Drainagesystem für Grundwasser zur Verminderung des Auftriebes auf die Dichtung bezeichnet, mit 5 eine Rundum-Drainage für Oberflächenwasser, mit 6 ein Drainagesystem für verschmutztes, die Deponie durchsickerndes Oberflächenwasser.

Das dadurch gebildete Becken ist mit Abfall 8 aus Hausmüll, Sperrgut Industrieabfällen, Klärschlamm und Schlacken aus Kehrichtverbrennungsanlagen verfüllt. Darüber ist eine Anschüttung aus gleichem Abfall 8 aufgebracht worden. Die Anschüttung ist mit inertem Material 7 abgeböscht.

Die Abdeckung der ersten Lehmschicht 1 ist nach deren Fertigstellung mit Hilfe eines Kunststoff-Faservlieses hergestellt worden. Das Kunststoff-Faservlies ist unterseitig mit einer Latexschicht versehen.

Die Latexschicht bringt für das Kunststoff-Faservlies eine Abdichtung gegen fließendes Oberflächenwasser, jedoch bleibt eine gewisse Feuchtigkeitsdurchlässigkeit. Dadurch wird sichergestellt, daß die unten liegende Lehmschicht nach ihrem Verlegen zwar ausreichend feucht gehalten wird, jedoch keine die Verlegung der Abdichtungsbahn hindernde übergroße Nässe entsteht. Oberflächenwasser, das sich auf der Abdichtungsbahn sammelt, wird entweder durch natürliches Gefälle einem Wasserabfluß zugeführt oder läßt sich vor der Verlegung der Abdichtungsbahn 2 leicht absaugen.

## Patentansprüche

1. Abdichtung für Deponien oder dergleichen, bei der eine Kunststoffabdichtungsbahn (2) in Kombination mit einer mineralischen Dichtschicht (1), beispielsweise Lehm, oberhalb von dieser Dichtschicht Anwendung findet und bei der zwischen der mineralischen Schicht und der Kunststoffabdichtungsbahn eine Abdeckung vorgesehen ist, dadurch gekennzeichnet, daß die Abdeckung (9) aus einem Textil mit einer verrottbaren Dichtschicht besteht.

2. Abdichtung nach Anspruch 1, dadurch gekennzeichnet, daß das Textil durch ein Vlies gebildet ist.

3. Abdichtung nach Anspruch 1 oder 2, dadurch gekennzeichnet, daß die Dichtschicht aus Latex besteht.

## Claims

1. Seal for disposal dumps or the like, wherein a plastics sealing sheet (2) in combination with a mineral sealing layer (1), for example clay, is used above this sealing layer, and wherein, between the mineral layer and the plastics sealing sheet, a cover is provided, characterized in that the cover (9) consists of a textile having a decomposable sealing layer.

2. Seal according to claim 1, characterized in that the textile is formed of a non-woven fabric.

3. Seal according to Claim 1 or 2, characterized in that the sealing layer is of latex.

## Revendications

1. Etanchement pour décharges ou analogues, pour lequel est employée une nappe d'étanchement en matière synthétique (2) en combinaison avec une couche d'étanchéité minérale (1), par exemple de l'argile, au-dessus de cette couche d'étanchéité, et pour lequel est prévue une couverture entre la couche minérale et la nappe d'étanchement en matière synthétique, caractérise, en ce que la couverture (9) est constituée d'un textile pourvu d'une couche d'étanchéité dégradable.

2. Etanchement selon la revendication 1, caractérisé en ce que le textile est formé d'un non-tissé.

3. Etanchement selon les revendications 1 ou 2, caractérisé en ce que la couche d'étanchéité est en latex.